# EUROPEAN PATENT APPLICATION

(11) **EP 4 270 521 A1**
(43) Date of publication of application: **01.11.2023**
(21) Application number: 21910994.9
(22) Date of filing: 23.12.2021
(51) Int. Cl.: H01M 4/13, H01M 4/131, H01M 4/36, H01M 4/525, H01M 4/62, H01M 10/0566

(54) **POSITIVE ELECTRODE FOR SECONDARY BATTERY, AND SECONDARY BATTERY**

(30) Priority: 25.12.2020 JP 2020217412
(71) Applicant: Panasonic Intellectual Property Management Co., Ltd., Kadoma-shi, Osaka 571-0057 (JP)
(72) Inventor: NATSUI Ryuichi, Kadoma-shi, Osaka 571-0057 (JP); NAKURA Kensuke, Kadoma-shi, Osaka 571-0057 (JP); HIBINO Mitsuhiro, Kadoma-shi, Osaka 571-0057 (JP)
(74) Representative: Novagraaf International SA
(86) International application number: PCT/JP2021/047992
(87) International publication number: WO 2022/138855

(57) **Abstract**

A positive electrode for secondary batteries includes a positive electrode current collector, and a positive electrode mixture layer provided on a surface of the positive electrode current collector. The positive electrode mixture layer contains a positive electrode active material, a conductive agent, a polysaccharide, and a resin other than the polysaccharide, and at least part of surfaces of the positive electrode active material, the conductive agent, and the resin is coated with the polysaccharide.

## Description

### [Technical Field]

The present disclosure relates to a secondary battery, specifically to a positive electrode used for secondary batteries.

### [Background Art]

Secondary batteries, especially lithium-ion secondary batteries, have high output and high energy density and are therefore expected as promising power sources for small consumer applications, power storage devices, and electric cars. As a positive electrode active material for a lithium-ion secondary battery, a composite oxide of lithium and a transition metal (e.g., cobalt) is used. A higher capacity can be achieved by replacing part of the cobalt with nickel.

In lithium-ion secondary batteries, usually, a positive electrode is produced by applying a slurry containing a positive electrode active material and a binding agent (binder) onto a surface of a positive electrode current collector, followed by drying, to form a positive electrode mixture layer. Non-Patent Literature 1 reveals that by using an aqueous guar gum solution as a liquid binder, and forming a positive electrode mixture layer using a slurry containing guar gum, the durability can be improved even when a lithium-excess type lithium-transition meal composite oxide is used as the positive electrode active material.

### [Prior Art Literature]

### [Non-Patent Literature]

Non-Patent Literature 1: Shi-Gang Sun, Electrochimica Acta, 351, 136401 (2020)

### [Summary of Invention]

### [Technical Problem]

However, in preparing a slurry containing guar gum, depending on the alkalinity of the slurry containing a positive electrode active material, the guar gum may be solidified into a gel in some cases and not be able to be applied, or even though application is possible, the characteristics as a positive electrode may deteriorate in some cases. As a result, the productivity is reduced.

### [Solution to Problem]

In view of the above, one aspect of the present disclosure relates to a positive electrode for secondary batteries, including: a positive electrode current collector; and a positive electrode mixture layer provided on a surface of the positive electrode current collector, wherein the positive electrode mixture layer contains a positive electrode active material, a conductive agent, a polysaccharide, and a resin other than the polysaccharide, and at least part of surfaces of the positive electrode active material, the conductive agent, and the resin is coated with the polysaccharide.

Another aspect of the present disclosure relates to a secondary battery, including: the above-described positive electrode for secondary batteries; a separator; a negative electrode facing the positive electrode for secondary batteries with the separator interposed between the negative electrode and the positive electrode; and a liquid electrolyte.

### [Advantageous Effects of Invention]

According to the present disclosure, a secondary battery having excellent durability and a positive electrode for secondary batteries used thereof can be stably produced.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A partially cut-away schematic oblique view of a secondary battery according to one embodiment of the present disclosure.
[FIG. 2A] A graph showing changes in discharge capacity for each charge-discharge cycle, in secondary batteries of Example 3 and Comparative Example 2.
[FIG. 2B] A graph showing changes in average discharge voltage for each charge-discharge cycle, in the secondary batteries of Example 3 and Comparative Example 2.

### [Description of Embodiments]

### [Positive electrode for secondary batteries]

A positive electrode for secondary batteries according to an embodiment of the present disclosure includes a positive electrode current collector, and a positive electrode mixture layer provided on a surface of the positive electrode current collector. The positive electrode mixture layer contains a positive electrode active material, a conductive agent, a polysaccharide, and a resin other than the polysaccharide. At least part of surfaces of the positive electrode active material, the conductive agent, and the resin is coated with the polysaccharide.

A polysaccharide coating formed on the surface of the positive electrode active material can stabilize the crystallinity at the surface of the positive electrode active material. Therefore, in a secondary battery produced using the positive electrode for secondary batteries, the crystallinity at the surface of the positive electrode active material is maintained high, and thus, a secondary battery with low resistance and excellent durability can be realized. A polysaccharide coating can also be formed on the surface of the conductive agent and/or the resin. This can suppress the decomposition of the electrolyte starting from the conductive agent or resin, and can realize a secondary battery with excellent durability.

As the polysaccharide, a water-soluble compound having a glucoside bond and exerting thickening property when dissolved in water is preferably used. As the polysaccharide, for example, at least one selected from the group consisting of pectin, alginic acid, pullulan, mannan, xanthan gum, guar gum, starch, glycogen, chitin, dextran, agarose, carrageenan, heparin, hyaluronic acid, glucomannan, arabic gum, gelatin, tremel gum, and derivatives thereof can be used. The derivatives of the polysaccharide can include salt compounds, ester compounds, ether compounds, amide compounds, and the like. Among them, guar gum can be preferably used. The guar gum may be a derivative in which the hydrogen of at least part of its hydroxyl groups is substituted by an alkyl group or the like.

The resin other than the polysaccharide can be contained as a binder in the positive electrode mixture layer. As the resin, for example, a least one selected from the group consisting of: fluorocarbon resins, such as polyvinylidene fluoride (PVdF), polytetrafluoroethylene (PTFE), and tetrafluoroethylene-hexafluoropropylene copolymer (HFP); acrylic resins, such as polymethyl acrylate and ethylene-methyl methacrylate copolymer; polyolefin resins; polyamide resins; polyimide resins; and rubbery materials, such as styrene-butadiene rubber (SBR) and acrylic rubber can be used. The resin can be an organic compound that is more readily soluble in organic solvent than in water.

The positive electrode mixture layer in which the surfaces of the positive electrode active material, the conductive agent, and the resin are coated with the polysaccharide can be obtained by applying a slurry containing a positive electrode active material, a conductive agent, and a resin onto a surface of a positive electrode current collector, followed by drying, to form a positive electrode mixture layer that contains no polysaccharide on the positive electrode current collector, and then, applying a liquid dispersion of the polysaccharide dispersed in a dispersion medium (e.g., water) onto the surface of the positive electrode mixture layer, followed by drying. By forming a polysaccharide coating in the manner as above, since the positive electrode active material with strong alkalinity is not contained in the liquid dispersion, gelling of the polysaccharide in the liquid dispersion can be avoided, which eases the application of the liquid dispersion. Therefore, a positive electrode for secondary batteries having excellent durability can be stably obtained without reducing the productivity.

By application of the liquid dispersion, the polysaccharide is allowed to permeate into the positive electrode mixture layer through the voids in the porous positive electrode mixture layer, and thus, throughout the entire region in the thickness direction of the positive electrode mixture layer, the surfaces of the positive electrode active material, the conductive agent, and the resin can be coated with the polysaccharide. However, in this case, the concentration of the polysaccharide in the positive electrode mixture layer is not uniform in the depth direction, and can have such a localized concentration distribution in the depth direction that the concentration of the polysaccharide is higher as closer to the surface of the positive electrode mixture layer (that is, the surface opposite to the positive electrode current collector).

In the positive electrode mixture layer, the polysaccharide may be contained in an amount of, for example, 0.1 mass% to 0.5 mass%, preferably in an amount of 0.1 mass% to 0.25 mass%, relative to the total amount of the positive electrode active material. When the positive electrode for secondary batteries contains the polysaccharide within the above concentration range, a secondary battery with excellent durability can be realized.

The content of the polysaccharide can be determined using a sample obtained by taking out a positive electrode mixture layer only, from the secondary battery in a discharged state. Specifically, first, the secondary battery in a discharged state is disassembled, to take out a positive electrode. Next, the positive electrode is washed with an organic solvent, and dried under vacuum, from which only the positive electrode mixture layer is peeled off, to obtain a sample. By subjecting the sample to thermal analysis, such as TG-DTA, the proportions of the components other than the positive electrode active material, i.e., the polysaccharide, the binder, and the conductive agent, can be calculated.

The positive electrode active material may include a lithium-containing composite oxide which has a layered structure and in which 80 atm% or more of metals other than lithium is nickel (hereinafter sometimes referred to as an "HN composite oxide"). By using a lithium-containing composite oxide with high Ni content as the positive electrode active material, a high capacity can be realized. However, when the Ni content is increased in the lithium-containing composite oxide, it may occur in some cases that Li is extracted excessively from the positive electrode active material, and because of this, the surface of the positive electrode active material is modified and changed into a structure that is difficult to absorb and release Li. As a result, the migration of lithium ions is inhibited, and the deterioration in cycle characteristics tends to be severe. However, by coating the surface of the HN composite oxide with the polysaccharide, the surface structure of the HN composite oxide is stabilized, the deterioration in cycle characteristics is suppressed, and the durability is improved.

The positive electrode active material may contain a lithium-transition metal composite oxide having a layered rock-salt structure as a basic structure. The lithium-transition metal composite oxide may be a lithium-excess type lithium-transition metal composite oxide (hereinafter sometimes referred to as a "Li-rich composite oxide") in which the atomic ratio Li/M of lithium to transition metal M is 1 or greater. The Li-rich composite oxide has a structure in which part of the transition metal sites in the layered rock-salt structure is replaced with Li. With the Li-rich composite oxide, likewise with the HN composite oxide, the surface structure of the positive electrode active material tends to be unstable due to the extraction of Li, tending to be changed into a structure that is difficult to absorb and release Li. As a result, the migration of lithium ions is inhibited, and the deterioration in cycle characteristics tends to be severe. However, by coating the surface of the Li-rich composite oxide with the polysaccharide, the surface structure of the Li-rich composite oxide is stabilized, the deterioration in cycle characteristics is suppressed, and the durability is improved. Furthermore, by coating the surface of the Li-rich composite oxide with the polysaccharide, the drop in battery voltage after charge that may occur associated with repeated charge and discharge is also suppressed.

More specifically, the positive electrode active material may include a lithium-nickel composite oxide represented by a chemical formula LiₐNi_{b}M_{c}O₂. Here, M includes at least one selected from the group consisting of Co, Al, Mn, Fe, Ti, Sr, Na, Mg, Ca, Sc, Y, Cu, Zn, Cr, and B. In the case of the HN composite oxide, for example, 0 < a ≤ 1.2, 0.8 ≤ b ≤ 1, and b+c = 1 may be satisfied. In the case of the Li-rich composite oxide, for example, 0 < a ≤ 1.8, 0.5 ≤ b+c < 1, and 0.1 ≤ b ≤ 0.6 may be satisfied. The value a representing the molar ratio of Li varies during charge and discharge.

As the positive electrode active material, in order to achieve a high capacity, the proportion of nickel in the metals other than lithium in the above lithium-containing composite oxide may be 85 atm% or more. According to the present embodiment, even when the Ni content in the positive electrode active material is increased as above, excellent cycle characteristics can be achieved.

Next, a secondary battery according to an embodiment of the present disclosure will be specifically described. The secondary battery includes the above-described positive electrode for secondary batteries, a separator, a negative electrode facing the positive electrode with the separator interposed between the negative electrode and the positive electrode, and a liquid electrolyte.

### [Positive electrode]

The positive electrode includes a positive electrode current collector, and a positive electrode mixture layer formed on a surface of the positive electrode current collector and containing a positive electrode active material. As the positive electrode, the above-described positive electrode for secondary batteries is used. The positive electrode mixture layer contains, for example, a positive electrode active material, a binder (resin), and the like, and can be formed by applying a positive electrode slurry prepared by dispersing a positive electrode mixture in a dispersion medium, followed by drying. Subsequently, a liquid dispersion containing a polysaccharide is applied onto the applied film of the positive electrode slurry. This allows the polysaccharide to enter the voids in the positive electrode mixture layer, and thus, the surfaces of the positive electrode active material, the conductive agent, and the resin can be coated with the polysaccharide. The applied film of the positive electrode material mixture layer after coated with the polysaccharide may be rolled, if necessary. The positive electrode material mixture layer may be formed on one surface of the positive electrode current collector, or may be formed on both surfaces thereof.

The polysaccharide may be contained in the positive electrode slurry as long as the productivity is not impaired. The polysaccharide contained in the positive electrode slurry may be the same as or different from the polysaccharide contained in the liquid dispersion.

The conductive agent may be a carbon-containing conductive material. As the carbon-containing conductive material, a carbon black, such as acetylene black and Ketjen black, can be preferably used. The carbon-containing conductive material may include carbon nanotubes. Another conductive agent other than the carbon-containing conductive material may be contained in the positive electrode mixture layer. The positive electrode mixture layer can contain a thickener and the like, as optional components. As the thickener and the other conductive agent, any known materials can be used.

As the positive electrode active material, a lithium-containing composite oxide having a layered structure (e.g., a rock-salt type crystal structure) containing lithium and a transition metal can be used. Specifically, the lithium-containing composite oxide may be, for example, a lithium-nickel composite oxide represented by LiₐNi_{b}M_{1-b}O₂, where 0 < a ≤ 1.2, 0.8 ≤ b ≤ 1, and M includes at least one selected from the group consisting of Co, Al, Mn, Fe, Ti, Sr, Na, Mg, Ca, Sc, Y, Cu, Zn, Cr, and B. In particular, M preferably includes at least one selected from the group consisting of Co, Mn, Al, and Fe. In view of the stability of the crystal structure, Al may be included as the element represented by M. Note that the value a, which indicates the molar ratio of lithium, increases and decreases during charge and discharge. Specific examples of such a composite oxide include a lithium-nickel-cobalt-aluminum composite oxide (e.g., LiNi_{0.9}Co_{0.05}Al_{0.05}O₂).

Here, in view of achieving a high capacity, the lithium-transition metal composite oxide is desirably an HN composite oxide in which the proportion of Ni in the metal elements other than Li is 80 atm% or more. The proportion of Ni in the metal elements other than Li may be 85 atm% or more, and may be 90 atm% or more. The proportion of Ni in the metal elements other than Li is desirably, for example, 95 atm% or less. When limiting the range, these upper and lower limits can be combined in any combination.

The Co, Mn, and Al contribute to the stabilization of the crystal structure of the HN composite oxide with high Ni content. However, for reduction in production costs, the Co content is desirably as low as possible. The HN composite oxide with low Co content or free of Co may contain Mn and Al.

The proportion of Co in the metal elements other than Li is desirably 20 atm% or less, more desirably 10 atm% or less or 5 atm% or less, and may be free of Co. In view of the stability of the crystal structure of the HN composite oxide, it is desirable to contain 1 atm% or more or 1.5 atm% or more of Co.

The proportion of Mn in the metal elements other than Li may be 10 atm% or less, and may be 5 atm% or less. The proportion of Mn in the metal elements other than Li may be 1 atm% or more, may be 3 atm% or more, and may be 5 atm% or more. When limiting the range, these upper and lower limits can be combined in any combination.

The proportion of Al in the metal elements other than Li may be 10 atm% or less, and may be 5 atm% or less. The proportion of Al in the metal elements other than Li may be 1 atm% or more, may be 3 atm% or more, and may be 5 atm% or more. When limiting the range, these upper and lower limits can be combined in any combination.

The element M may include at least one selected from the group consisting of Ti, Zr, Nb, Mo, W, Zn, B, Si, Mg, Ca, Sr, Sc, and Y In particular, when at least one selected from the group consisting of Nb, Sr, and Ca is contained in the HN composite oxide, the surface structure of the composite oxide is stabilized, the resistance is reduced, and the leaching of metals can be further suppressed. These elements are more effective when they are locally distributed near the particle surfaces of the composite oxide.

Another example of the positive electrode active material is a lithium-excess type lithium-transition metal composite oxide (Li-rich composite oxide) in which part of the sites occupied by the transition metal in the aforementioned lithium-transition metal composite oxide having a rock-salt type crystal structure is replaced with lithium. Specifically, the Li-rich composite oxide may be, for example, a lithium-nickel composite oxide represented by LiₐNi_{b}M_{c}0₂, where 0 < a ≤ 1.8, 0.5 ≤ b+c < 1, 0.1 ≤ b ≤ 0.6, and M includes at least one selected from the group consisting of Co, Al, Mn, Fe, Ti, Sr, Na, Mg, Ca, Sc, Y, Cu, Zn, Cr, and B. In particular, M preferably includes at least one selected from the group consisting of Co, Mn, Al, and Fe. In view of the stability of the crystal structure, Al may be included as an element represented by M. Note that the value a, which indicates the molar ratio of lithium, increases and decreases during charge and discharge.

Specific examples of the Li-rich composite oxide include a lithium-manganese-nickel composite oxide represented by Li_{1.16}Mn_{0.5}Ni_{0.34}O₂, and a lithium-manganese-nickel-cobalt composite oxide represented by Li_{1.2}Mn_{0.54}Ni_{0.13}Co_{0.13}O₂ and Li_{1.16}Mn_{0.5}Ni_{0.17}Co_{0.17}.

The contents of the elements constituting the composite oxide can be determined by using an inductively coupled plasma atomic emission spectroscopy (ICP-AES), an electron probe microanalyzer (EPMA), an energy dispersive X-ray spectroscopy (EDX), or the like.

The HN composite oxide and the Li-rich composite oxide are, for example, secondary particles of a plurality of primary particles aggregated together. The particle diameter of the primary particles is, for example, 0.05 µm or more and 1 µm or less. The average particle diameter of the secondary particles of the composite oxide HN is, for example, 3 µm or more and 30 µm or less, and may be 5 µm or more and 25 µm or less.

In the present specification, the average particle diameter of the secondary particles means a particle diameter at 50% cumulative volume (volume average particle diameter) in a particle size distribution measured by a laser diffraction and scattering method. Such a particle diameter is sometimes referred to as D50. As the measuring apparatus, for example, "LA-750", available from Horiba, Ltd. (HORIBA) can be used.

The above HN composite oxide and Li-rich composite oxide can provide a high capacity, but on the other hand, the crystal structures thereof tend to be unstable especially in a fully charged state, and the surface of the active material particles tends to be changed into a crystal structure that is difficult to absorb and release lithium ions (i.e., to be inactivated) due to repeated charge and discharge. As a result, the cycle characteristics tend to deteriorate. However, by using the positive electrode for secondary batteries of the present embodiment, since the surface of the active material particles is coated with the polysaccharide, the cycle characteristics can be maintained high even when the HN composite oxide and the Li-rich composite oxide are used as the active material. Therefore, a secondary battery with excellent durability and high energy density can be realized.

The form and the thickness of the positive electrode current collector may be respectively selected from the forms and the range corresponding to those of the negative electrode current collector. The positive electrode current collector may be made of, for example, stainless steel, aluminum, an aluminum alloy, and titanium.

### [Negative electrode]

The negative electrode includes a negative electrode active material. The negative electrode usually includes a negative electrode current collector, and a layer of a negative electrode mixture (hereinafter, a negative electrode mixture layer) held on the negative electrode current collector. The negative electrode mixture layer can be formed by applying a negative electrode slurry prepared by dispersing constituent components of the negative electrode mixture in a dispersion medium, onto a surface of the negative electrode current collector, followed by drying. The applied film after drying may be rolled as needed.

The negative electrode mixture contains a negative electrode active material as an essential component, and may contain a binder, a thickener, a conductive agent, and the like as optional components.

### (Negative electrode active material)

As the negative electrode active material, metal lithium, a lithium alloy, and the like may be used, but a material capable of electrochemically absorbing and releasing lithium ions is preferably used. Such a material includes a carbonaceous material and a Si-containing material. The negative electrode may contain one of these negative electrode active materials singly, or in combination of two or more kinds.

Examples of the carbonaceous material include graphite, graphitizable carbon (soft carbon), and non-graphitizable carbon (hard carbon). The carbonaceous material may be used singly, or in combination of two or more kinds. Among them, preferred as the carbonaceous material is graphite because of its excellent stability during charge and discharge and its low irreversible capacity. Examples of the graphite include natural graphite, artificial graphite, and graphitized mesophase carbon particles.

Examples of the Si-containing material include elementary Si, a silicon alloy, and a silicon compound (e.g., silicon oxide), and a composite material including a lithium-ion conductive phase (matrix) and a silicon phase dispersed therein. The silicon oxide is exemplified by SiOₓ particles. The x may be, for example, 0.5 ≤ x < 2, and may be 0.8 ≤ x ≤ 1.6. The lithium-ion conductive phase can be at least one selected from the group consisting of a SiO₂ phase, a silicate phase, and a carbon phase.

As the binder, the thickener, and the conductive agent, and the dispersion medium used in the negative electrode slurry, for example, the materials exemplified for the positive electrode and any known materials can be used.

As the negative electrode current collector, for example, a metal foil can be used. The negative electrode current collector may be porous. The material of the negative electrode current collector may be, for example, stainless steel, nickel, a nickel alloy, copper, and a copper alloy. The thickness of the negative electrode current collector is not particularly limited, but is, for example, 1 µm to 50 µm, and may be 5 µm to 30 µm.

### [Liquid electrolyte]

The liquid electrolyte includes a solvent and a solute dissolved in the solvent. The solute is an electrolyte salt that ionically dissociates in liquid electrolyte. The solute can include, for example, a lithium salt. The components of the liquid electrolyte other than the solvent and solute are additives. The liquid electrolyte can contain various additives.

As the solvent, any known materials can be used. As the solvent, for example, a cyclic carbonic acid ester, a chain carbonic acid ester, a cyclic carboxylic acid ester, a chain carboxylic acid ester, and the like can be used. Examples of the cyclic carbonic acid ester include propylene carbonate (PC), ethylene carbonate (EC), fluoroethylene carbonate (FEC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include non-aqueous solvents, such as methyl acetate, ethyl acetate, propyl acetate, methyl propionate (MP), and ethyl propionate (EP). These non-aqueous solvents may be used singly or in combination of two or more kinds.

As the lithium salt, for example, a lithium salt of a chlorine-containing acid (e.g., LiClO₄, LiAlCl₄, LiB₁₀Cl₁₀), a lithium salt of a fluorine-containing acid (e.g., LiPF₆, LiPF₂O₂, LiBF₄, LiSbF₆, LiAsF₆, LiCF₃SO₃, LiCF₃CO₂), a lithium salt of a fluorine-containing acid imide (e.g., LiN(FSO₂)₂, LiN(CF₃SO₂)₂, LiN(CF₃SO₂)(C₄F₉SO₂), LiN(C₂F₅SO₂)₂), and a lithium halide (e.g., LiCl, LiBr, LiI) can be used. These lithium salts may be used singly or in combination of two or more kinds.

The concentration of the lithium salt in the liquid electrolyte may be 1 mol/liter or more and 2 mol/liter or less, and may be 1 mol/liter or more and 1.5 mol/liter or less. By controlling the lithium salt concentration in the above range, a liquid electrolyte having excellent ion conductivity and appropriate viscosity can be obtained. The lithium salt concentration is not limited to the above.

The liquid electrolyte may contain any other known additives. Examples of the additives include 1,3-propanesultone, methyl benzenesulfonate, cyclohexylbenzene, biphenyl, diphenyl ether, and fluorobenzene.

### [Separator]

A separator is interposed between the positive electrode and the negative electrode. The separator is excellent in ion permeability and has moderate mechanical strength and electrically insulating properties. As the separator, for example, a microporous thin film, a woven fabric, a nonwoven fabric, and the like can be used. The separator is preferably made of, for example, polyolefin, such as polypropylene and polyethylene.

In an exemplary structure of the secondary battery, an electrode group formed by winding the positive electrode and the negative electrode with the separator interposed therebetween is housed together with a non-aqueous electrolyte in an outer body. The wound-type electrode group may be replaced with a different form of the electrode group, such as a stacked-type electrode group formed by stacking the positive electrode and the negative electrode with the separator interposed therebetween. The secondary battery may be of any type, such as a cylindrical, prismatic, coin, button, or laminate type.

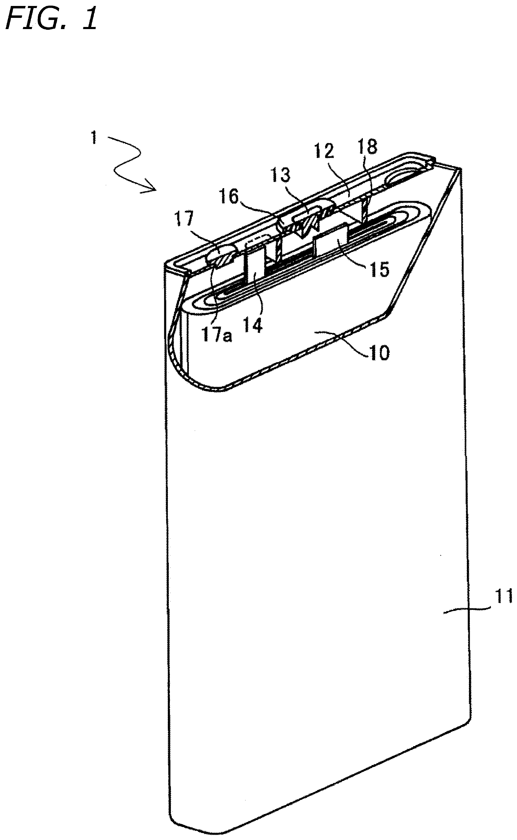

FIG. 1 is a partially cut-away schematic oblique view of a prismatic secondary battery according to an embodiment of the present disclosure.

A secondary battery 1 illustrated in FIG. 1 includes a bottomed prismatic battery case 11, and an electrode group 10 and a non-aqueous electrolyte (not shown) housed in the battery case 11. The electrode group 10 has a long negative electrode, a long positive electrode, and a separator interposed therebetween and preventing them from directly contacting with each other. The electrode group 10 is formed by winding the negative electrode, the positive electrode, and the separator around a flat plate-like winding core, and then removing the winding core.

To the negative electrode current collector of the negative electrode, a negative electrode lead 15 is attached at its one end, by means of welding or the like. To the positive electrode current collector of the positive electrode, a positive electrode lead 14 is attached at its one end, by means of welding or the like. The negative electrode lead 15 is electrically connected at its other end to a negative electrode terminal 13 disposed at a sealing plate 12. A gasket 16 is disposed between the sealing plate 12 and the negative electrode terminal 13, providing electrical insulation therebetween. The positive electrode lead 14 is connected at its other end to the sealing plate 12, and electrically connected to the battery case 11 serving as a positive electrode terminal. A frame 18 made of resin is disposed above the electrode group 10. The frame 18 separates the electrode group 10 from the sealing plate 12 and also separates the negative electrode lead 15 from the battery case 11. The opening of the battery case 11 is sealed with the sealing plate 12. In the sealing plate 12, a liquid inlet 17a is formed. The electrolyte is injected through the liquid inlet 17a into the battery case 11. Thereafter, the liquid inlet 17a is closed with a sealing plug 17.

The present disclosure will be specifically described below with reference to Examples and Comparative Examples. It is to be noted, however, the present disclosure is not limited to the following Examples.

### <Example 1>

### (1) Production of negative electrode

A silicon composite material and graphite were mixed in a mass ratio of 5:95, and used as a negative electrode active material. The negative electrode active material, sodium carboxymethylcellulose (CMC-Na), styrene-butadiene rubber (SBR), and water were mixed in a predetermined ratio, to prepare a negative electrode slurry. Next, the negative electrode slurry was applied onto a surface of a copper foil serving as a negative electrode current collector, and the applied film was dried, and rolled, to form a negative electrode mixture layer on both surfaces of the copper foil.

### (2) Production of positive electrode

As the positive electrode active material, LiNi_{0.8}Mn_{0.2}O₂ as an HN composite oxide was used. LiNi_{0.8}Mn_{0.2}O₂, acetylene black (AB) serving as a conductive agent, polyvinylidene fluoride (PVdF) serving as a binder (resin), and N-methyl-2-pyrrolidone (NMP) were mixed in a predetermined mass ratio of LiNi_{0.8}Mn_{0.2}O₂ : AB : PVdF = 92:5:3, to prepare a positive electrode slurry. Next, the positive electrode slurry was applied onto a surface of an aluminum foil serving as a positive electrode current collector, and the applied film was dried, and rolled, to form a positive electrode mixture layer on both surfaces of the aluminum foil.

An aqueous guar gum solution was prepared. The aqueous guar gum solution was applied onto the surface of the positive electrode mixture layer, to allow the guar gum to permeate into the positive electrode mixture layer. Thereafter, water was removed by drying, to obtain a positive electrode. In the aqueous guar gum solution, guar gum was dissolved in water in an amount of 0.25 parts by mass relative to 100 parts by mass of the positive electrode active material.

### (3) Preparation of liquid electrolyte

To a mixed solvent containing ethylene carbonate (EC) and ethyl methyl carbonate (EMC) in a volume ratio of 3:7, LiPF₆ was added as a lithium salt, to prepare a liquid electrolyte. The concentration of LiPF₆ in the non-aqueous liquid electrolyte was set to 1.0 mol/liter.

### (4) Fabrication of secondary battery

With a lead tab was attached to each electrode, the positive electrode and the negative electrode were spirally wound with a separator interposed therebetween such that the lead was positioned at the outermost layer, to prepare an electrode group. The electrode group was inserted into an outer body made of a laminated film having an aluminum foil as a barrier layer, and vacuum dried at 105 °C for 2 hours, and then, the non-aqueous liquid electrolyte was injected thereinto. The opening of the outer body was sealed, to complete a secondary battery Al.

### (5) Evaluation

### (Initial charge and discharge)

The completed battery was placed in a 25 °C environment and subjected to constant-current charging at a current of 0.1C until the voltage reached 4.5 V, and then to constant-voltage charging at a constant voltage of 4.5 V until the current reached 0.05C. Then, constant-current discharging was performed at a current of 0.1C until the voltage reached 2.5 V, to determine an initial capacity C₀ (mAh). The charge and discharge were performed in a 25 °C environment. The initial capacity was divided by the weight of the positive electrode active material, to determine a capacity per weight (g).

### (Charge and discharge 2)

constant-current charging was performed at a current of 0.2C until the voltage reached 4.5 V, and then, constant-voltage charging was performed at a constant voltage of 4.5 V until the current reached 0.01C. Then, constant-current discharging was performed at a current of 0.2C until the voltage reached 2.5 V, to determine a discharge capacity C (mAh). The charge and discharge were performed in a 25 °C environment.

### (Durability)

With the rest time between charge and discharge set to 20 minutes, 24 cycles of charging and discharging were performed under the conditions as in the above charge and discharge 2. This was followed by one cycle of charging and discharging performed under the same conditions as those for the initial charge and discharge, and the discharge capacity was checked. Then, 24 cycles of charging and discharging were performed again under the conditions as in the above charge and discharge 2. In this way, a total of 50 cycles of charging and discharging were performed. The ratio R₁ = C₁/C₀ of the discharge capacity C₁ at the 50th cycle to the initial discharge capacity C₀ was determined as a capacity retention rate, and R₁ ×100 was evaluated as an index indicating the durability.

### <Example 2>

In the production of the positive electrode, guar gum was dissolved in water in an amount of 0.5 parts by mass relative to 100 parts by mass of the positive electrode active material, to prepare an aqueous guar gum solution. The aqueous guar gum solution was applied onto the surface of the positive electrode mixture layer, followed by drying, to obtain a positive electrode.

Except for the above, in the same manner as in Example 1, a secondary battery A2 was produced and evaluated similarly.

### <Comparative Example 1>

In the production of the positive electrode, the aqueous guar gum solution was not applied onto the surface of the positive electrode mixture layer.

Except for the above, in the same manner as in Example 1, a secondary battery B1 was produced and evaluated similarly.

The evaluation results of the initial capacity and the durability of the batteries A1, A2 and B1 are shown in Table 1. Table 1 shows that in the batteries A1 and A2 using a positive electrode in which guar gum as a polysaccharide was applied, the initial capacity was high, and the durability was improved, as compared to in the battery B1 using a positive electrode in which no guar gum was applied.

**[Table 1]**

| Battery | Positive electrode active material | Polysaccharide | Initial capacity (mAh/g) | Capacity retention rate (%) |
|---|---|---|---|---|
| A1 | LiNi_{0.8}Mn_{0.2}O₂ | guar gum 0.25 wt% | 207.3 | 97.8 |
| A2 | LiNi_{0.8}Mn_{0.2}O₂ | guar gum 0.5 wt% | 207.0 | 97.1 |
| B1 | LiNi_{0.8}Mn_{0.2}O₂ | None | 206.4 | 96.4 |

### <Example 3>

### (1) Production of positive electrode

As the positive electrode active material, Li_{1.17}Ni_{0.56}Mn_{0.28}O₂ as a Li-rich composite oxide was used. Li_{1.17}Ni_{0.56}Mn_{0.28}O₂, acetylene black (AB) serving as a conductive agent, polyvinylidene fluoride (PVdF) serving as a binder (resin), and N-methyl-2-pyrrolidone (NMP) were mixed in a predetermined mass ratio of Li_{1.17}Ni_{0.56}Mn_{0.28}O₂ : AB : PVdF = 92:5:3, to prepare a positive electrode slurry. Next, the positive electrode slurry was applied onto a surface of an aluminum foil serving as a positive electrode current collector, and the applied film was dried, and rolled, to form a positive electrode mixture layer on both surfaces of the aluminum foil.

An aqueous guar gum solution was prepared. The aqueous guar gum solution was applied onto the surface of the positive electrode mixture layer, to allow the guar gum to permeate into the positive electrode mixture layer. Thereafter, water was removed by drying, to obtain a positive electrode. In the aqueous guar gum solution, guar gum was dissolved in water in an amount of 0.25 parts by mass relative to 100 parts by mass of the positive electrode active material.

Except for using the positive electrode produced as above, in the same manner as in Example 1, a negative electrode was produced, a liquid electrolyte was prepared, and a battery was fabricated, to complete a secondary battery A3.

### (2) Evaluation

The initial capacity C₀ and the capacity retention rate R₁ were determined in the same manner as in Example 1, except that the cutoff voltage in charging was changed to 4.7 V, to evaluate the durability.

### (Output retention rate)

Furthermore, the average discharge voltage was measured in each cycle of charge and discharge. The ratio R₂ = V₁/V₀ of the average discharge voltage V₁ after the 50th charge-discharge cycles to the average discharge voltage V₀ after the 1st cycle was obtained as a voltage retention rate. The capacity retention rate R₁ was multiplied by the voltage retention rate R₂, and R₁×R₂×100 was evaluated as the output retention rate.

### <Example 4>

### (1) Production of positive electrode

In the production of the positive electrode, guar gum was dissolved in water in an amount of 0.5 parts by mass relative to 100 parts by mass of the positive electrode active material, to prepare an aqueous guar gum solution. The aqueous guar gum solution was applied onto the surface of the positive electrode mixture layer, followed by drying, to obtain a positive electrode.

Except for the above, in the same manner as in Example 3, a secondary battery A4 was produced and evaluated in the same manner as in Example 3.

### <Comparative Example 2>

In the production of the positive electrode, the aqueous guar gum solution was not applied onto the surface of the positive electrode mixture layer.

Except for the above, in the same manner as in Example 3, a secondary battery B2 was produced and evaluated in the same manner as in Example 3.

The evaluation results of the initial capacity, the durability, and the output retention rate of the batteries A3, A4 and B2 are shown in Table 2. Table 1 shows that in the batteries A3 and A4 using a positive electrode in which guar gum as a polysaccharide was applied, the durability was improved, and the output retention rate was also improved, while a little reduction in the initial capacity was observed in the battery A4.

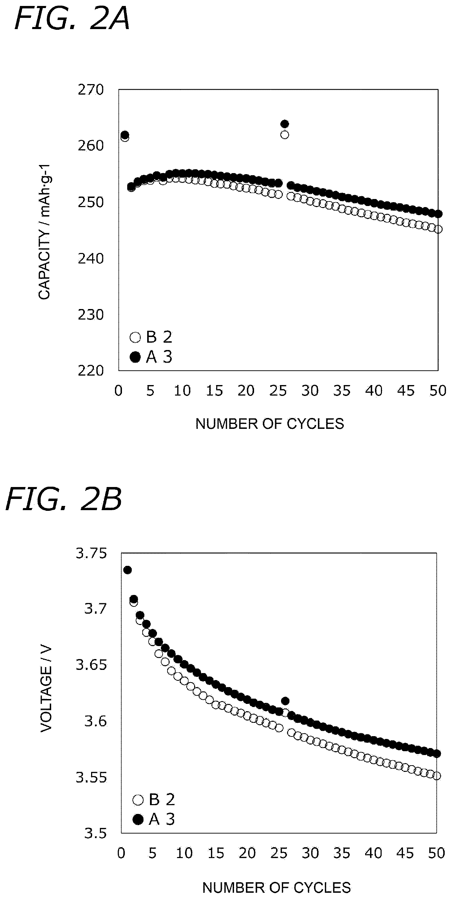

Changes in discharge capacity for each charge-discharge cycle in the battery A3 and the battery B2 are shown in FIG. 2A. Changes in average discharge voltage for each charge-discharge cycle in the battery A3 and the battery B2 are shown in FIG. 2B. As shown in FIGS. 2A and 2B, in the battery A3 using a positive electrode in which guar gum was applied, the decrease in discharge capacity due to repeated charge and discharge was suppressed, as compared to in the battery B2, and the reduction in average discharge voltage was also suppressed.

**[Table 2]**

| Battery | Positive electrode active material | Polysaccharide | Initial capacity (mAh/g) | Capacity retention rate (%) | Output retention rate (%) |
|---|---|---|---|---|---|
| A3 | Li_{1.17}Ni_{0.56}Mn_{0.28}O₂ | guar gum 0.25 wt% | 261.9 | 98.1 | 94.4 |
| A4 | Li_{1.17}Ni_{0.56}Mn_{0.28}O₂ | guar gum 0.5 wt% | 260.2 | 98.0 | 94.0 |
| B2 | Li_{1.17}Ni_{0.56}Mn_{0.28}O₂ | None | 261.3 | 97.1 | 93.0 |

### [Industrial Applicability]

According to the secondary battery according to the present disclosure, it is possible to provide a secondary battery having a high capacity and excellent cycle characteristics. The secondary battery according to the present disclosure is useful as a main power source for mobile communication equipment, portable electronic equipment, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: non-aqueous electrolyte secondary battery, 10: electrode group, 11: battery case, 12: sealing plate, 13: negative electrode terminal, 14: positive electrode lead, 15: negative electrode lead, 16: gasket, 17: sealing plug, 17a: liquid inlet, 18: frame

## Claims

1. A positive electrode for secondary batteries, comprising:
a positive electrode current collector; and a positive electrode mixture layer provided on a surface of the positive electrode current collector, wherein
the positive electrode mixture layer contains a positive electrode active material, a conductive agent, a polysaccharide, and a resin other than the polysaccharide, and
at least part of surfaces of the positive electrode active material, the conductive agent, and the resin is coated with the polysaccharide.

2. The positive electrode for secondary batteries according to claim 1, wherein in the positive electrode mixture layer, the polysaccharide is distributed such that, in a depth direction of the positive electrode mixture layer, a concentration of the polysaccharide is higher as closer to a surface of the positive electrode mixture layer opposite to the positive electrode current collector.

3. The positive electrode for secondary batteries according to claim 1 or 2, wherein a content of the polysaccharide in the positive electrode mixture layer is 0.1 mass% to 0.5 mass% relative to a total of the positive electrode active material.

4. The positive electrode for secondary batteries according to any one of claims 1 to 3, wherein the polysaccharide includes guar gum.

5. The positive electrode for secondary batteries according to any one of claims 1 to 4, wherein the resin includes polyvinylidene fluoride (PVdF).

6. The secondary battery according to any one of claims 1 to 5, wherein the positive electrode active material includes a lithium-containing composite oxide which has a layered structure and in which 80 atm% or more of metals other than lithium is nickel.

7. The positive electrode for secondary batteries according to any one of claims 1 to 5, wherein
the positive electrode active material includes a lithium-transition metal composite oxide having a layered rock-salt structure as a basic structure, and
in the lithium-transition metal composite oxide, an atomic ratio Li/M of lithium to transition metal M is 1 or greater.

8. A secondary battery, comprising:
the positive electrode for secondary batteries of any one of claims 1 to 7;
a separator; a negative electrode facing the positive electrode for secondary batteries with the separator interposed between the negative electrode and the positive electrode; and a liquid electrolyte.
